# EUROPEAN PATENT APPLICATION

(11) **EP 2 875 941 A1**
(43) Date of publication of application: **27.05.2015**
(21) Application number: 13005683.1
(22) Date of filing: 06.12.2013
(51) Int. Cl.: B29D 35/04, A43B 3/02, A43B 1/04

(54) **Injection and inner lining of polyurethane**

(30) Priority: 25.11.2013 PT 2013108297
(71) Applicant: Dehora - Industria de Calcado, LDA, 2400-828 Leiria (PT)
(72) Inventor: Ferreira Alves, Diogo Domingos, Vale do Horto 2400-828 Leiria (PT)

(57) **Abstract**

A footwear part that comprises a tubular knitted sock laminated with a Polyurethane film. This knitted sock laminated with Polyurethane film is drawn over the last allowing that after the mould is closed that the Polyurethane foam that is injected into the mould cavity to produce the boot, firmly adheres to this Polyurethane layer. Being the Polyurethane film a barrier layer, the fabric layer will become the inner lining of the boot remaininguniform in aspect without any seams, welding lines and free of any Polyurethane foam penetration resulting from the injection process.

## Description

### Technical field

The present innovation relates directly to the production of Polyurethane injected boots.

### Background

Polyurethane and PVC Waterproof boots are most commonly used in recreational and professional activities. This type of footwear provides dry feet during recreational or professional activity. In the professional activities such as industrial, farming, mining and others, safety is added by means of introducing steel toe cap and steel midsole to prevent work related injuries.

The inner lining is an inseparable part of this kind of footwear as it provides advantages during the production process but also improvements in visual appearance and user comfort.

The previous process of producing the inner lining is characterized by the cutting of two matching halves of a fabric/film laminate and thus sewing them all around leaving only the top open to allow the placing of the stocking over the last. This fabric /film laminate, widely available on the market, can be produced by a process called transfer coating or by any laminating process that involves bonding a fabric and a previously produced polyurethane film and bond them together with adhesive.

One drawback of the previous type of inner lining is that when the injection occurs, the Polyurethane foam penetrates throughout the sewing path through the stitch holes. This difficults the removal of the boot from the last, gives poor visual appearance and doesn't givean all-round comfort to the end user.

Another drawback of this previous this type of stocking is that each size of stockingwill only fit a limited range of lasts in production. For a complete range often to twelve sizes, the boot manufacturer will need at least five sock sizes.

### Summary

The tubular seamless lining for waterproof Polyurethane moulded boots present in this disclosure does provide the market and the bootmanufacturersbenefits that overcome the drawbacks of the previous method. The high elasticity of both knitted tubular sock and Polyurethane barrier film will allow enough width and length when drawn on the lasts so that only two sizes of tubular linings will be enough for a complete range of boots with twelve sizes, for example a model that ranges from size 37 to size 48.

Another advantage of the product here disclosed is the fact that the tubular knitted sock is completely covered with a polyurethane barrier film without any stitching or weld, and so, the Polyurethane foam will not penetrate through the lining. This represents a substantial increase in the general quality of the boot because of its superior visual appearance of a clean uniform inner lining as well as the increased comfort provided to the end user as it will not contact with Polyurethane foam inside the boot.

Another advantage disclosed is the fact that by producing these tubular seamless linings is that there will be no more waste fabric when producing this essential component for polyurethane boots. Each tubular sock will be laminated with a pre-defined, exactly dimensioned Polyurethane film sheet. The result is a more eco-friendly product that doesn't produce waste in production.

This invention overcomes all previous flaws of the previous article, as it reduces the mistakes in production due to having only two sock sizes for approximately 12 boot molds. The article here disclosed also adds value to the finished product for the boot manufacturers due to its perfect visual appearance without any Polyurethane foam inside the boot. The quality of the article to be purchased by the consumer increases substantially.

### Brief description of the drawings:

FIG 1 - view of the parts constituting the disclosed footwear component. Polyurethane film and tubular knitted sock.
FIG 2 - view of the tubular knitted sock laminated with Polyurethane film.
FIG 3 - cut view of the disclosed article drawn over the last.
FIG 4 - view of the last and outer moldset assembly in open position.

### Detailed description

The present disclosure describes a footwear component used in the production of injected Polyurethane foam boots used to provide waterproofness and safety in recreational and professional activities. The specific details of the invention are explained in the following description and the pictures provide a better understanding of certain aspects of the invention.

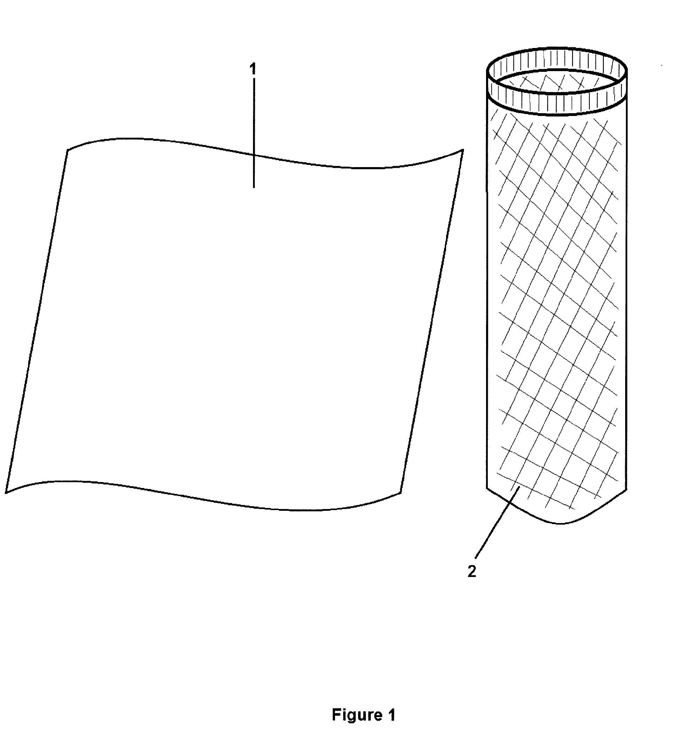

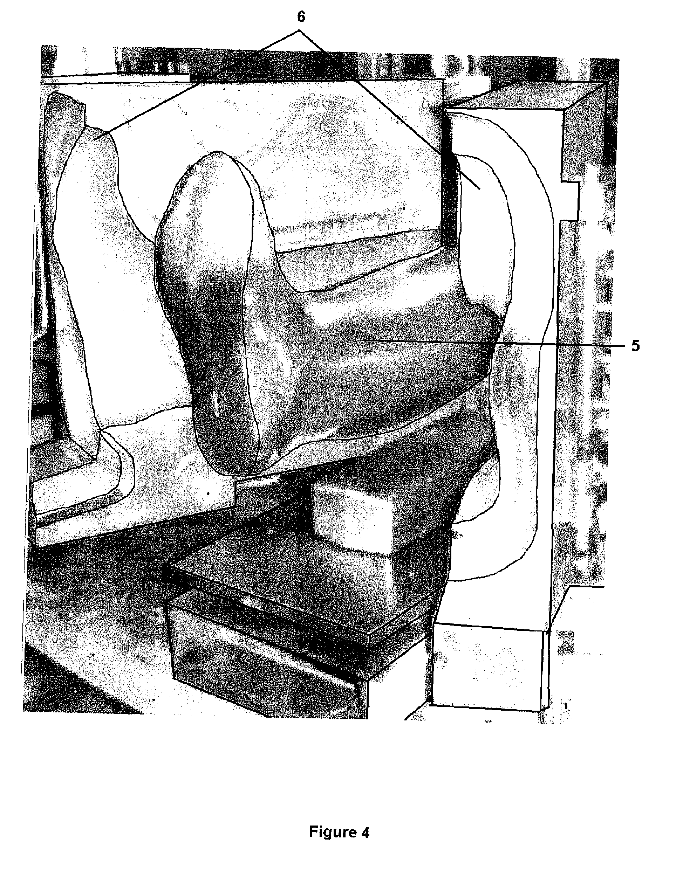

As seen in FIG 1 and FIG 4, to assemble the article here disclosed there are only two separate materials which are a pre-determined sized Polyurethane sheet 1 and a tubular shaped knitted sock 2. These two materials will be bonded together by means of applying an adhesive layer between them in order to ensure that they are firmly bonded and still maintain a great part of their original, individual elasticity. While the Polyurethane film 1 must be of a constant basic material formulation to ensure the desired elasticity and barrier properties, the tubular knitted sock 2 can be made of a variety of yarns, such as, Nylon, Poliester, Cotton, Acrylic, or other selected yarns, as long as the knitallows the tubular knitted sock 2 to maintain equal elastic properties that enables it to be drawn over the last 5 where it will be tight around the shapes without any creases or folds.

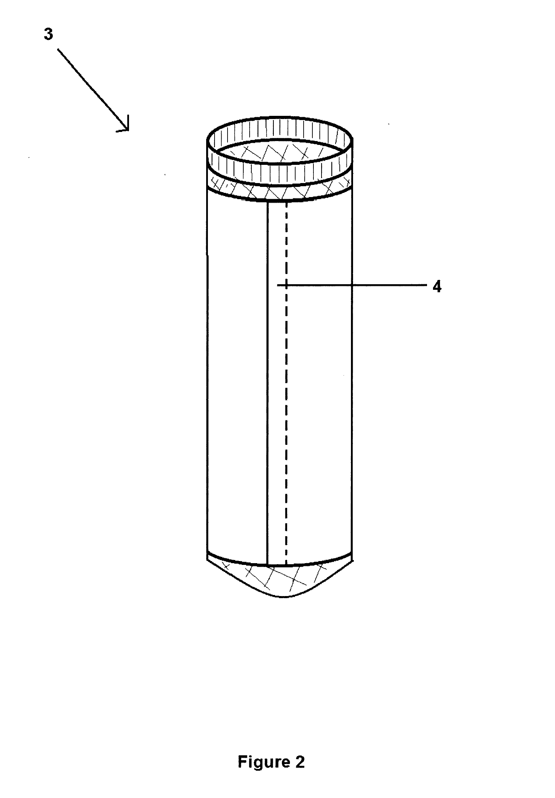

As seen in FIG 2, after the process of laminating the Polyurethane film 1 to the tubular knitted sock 2 we will have an injection and inner lining 3. When the lamination between the layers occurs, one end of the polyurethane film 1 will overlap 4 in approximately 1cm the other end of the polyurethane film 1 in order that this Polyurethane film 1 layer maintains the barrier properties, not allowing that the polyurethane foaminjected in the mould cavity penetrates through the polyurethane film 1 layerto the tubular knitted sock 2 layer. The injection and inner lining component 3 is shown in such way in FIG 2 to allow to see that there is a knitted sock 2 layer on the inside of a Polyurethane film 1 layer.

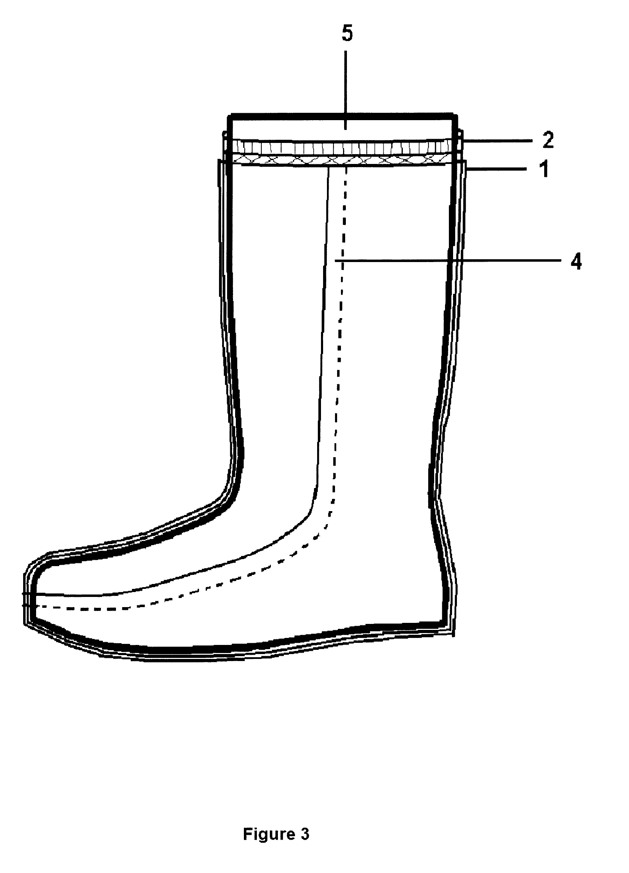

As seen in FIG 2 and FIG 3, upon drawn over the last 5, the sock 3 will adjust itself in a tight fit by means of its elasticity to all the shapes of the last 5. The fabric layer will be facing the last 5 while the Polyurethane layer 1 will is facing the outer mold 6. In FIG 3 the sock 3 is drawn over the last 5 in a position where the overlapping 4 is on the side of the last 5. This is not mandatory has the elasticity of the whole sock 3 allows it to be drawn with the overlapping 4 going through either the vamp, the heel or any other point of the last 5 as the elasticity of the sock 3 will allow it to stay tight in any position.

As seen in FIG 2 and FIG 4, after the sock 3 is drawn over the last 5, the outer mold 6 closes over it leaving a cavity between them where the polyurethane foam will be poured or injected. When the polyurethane foam enters the mold cavity, it immediately contacts the polyurethane layer 1. After the injection is complete there is a cooling period where the polyurethane solidifies. As it solidifies, the injected polyurethane firmly adheres to the polyurethane layer 1 of the sock 3, as both are of the same polymer family.

After the cooling cycle is complete, the outer mold opens leaving a Polyurethane boot over the last 5. After the boot is removed by hand or by automated machinery the inner part of the sock 3, the tubular knitted sock 2, which was facing the last 5 becomes now the inner lining of the boot without any Polyurethane foam inside due to the fact the Polyurethane layer 1, being a barrier layer, stopped the injected polyurethane foam from penetrating through the film onto the fabric layer.

## Claims

1. A footwear part that comprises a straight tubular knitted sock laminated with a Polyurethane film around it. This Polyurethane film laminated knitted sock is drawn over the last allowing that after the mould is closed the Polyurethane foam that is injected in the mould cavity to produce the boot, firmly adheres to this Polyurethane layer. Being the Polyurethane layer a barrier layer, the fabric layer will become the inner lining of the boot and will remain uniform in aspect without any stitches orseams, welding lines and free of any Polyurethane penetration resulting from the injection process.

2. a footwear part of claim 1, where the tubular knitted sock and the polyurethane film have highly elastic properties with memory, which allows the sock to be fitted on the last and remain tight to the last without any creases or folds until the outer boot mould closes and injects the Polyurethane foam in the annular space between the last and the outer mould.

3. a footwear part of claim 1, wherein the Polyurethane film has barrier properties, thus not allowing the penetration of the Polyurethane foam during the injection process through the film to the fabric and into the inside of the boot.

4. a footwear part of claim 1, where the laminated sock is one single piece from the toe to top.

5. a footwear part of claim 1, as inner lining of the boot, will not have any stitch or seam or welding seam in the visible inner part of the boots shaft or foot bed, as the production of this sock is not made through the cutting of matching halves or the cutting of one piece to be symmetrically folded that will either be stitched or welded.

6. a footwear part of claim 1, where prior, during or after the lamination of the Polyurethane film to the tubular knitted sock, the sock may have a closed toe or an open toe. This specification will be a decision of the boots manufacturers according to their own needs,according to their own boot models.

7. a footwear part of claim 6, when required, the closing of the socks toe can be made by stitching with any kind of yarn, including yarn with antistatic properties. The closing of the toe can also be made by ultrasonic welding or high frequency welding.

8. a footwear part of claim 1, where the polyurethane film sheet covers the entireknitted sock from the toe to the top.

9. a footwear part of claim 8, where the lamination of the polyurethane film sheet around the knitted sock will be in such way that one end of the Polyurethane film sheet will overlap the other end in enough length so that it may to seal both ends tomaintain the barrier properties during the injection process.

10. a footwear part of claim 9, where the overlapping of both ends will be of approximately 1cm and will be vertically to the knitted sock.

11. a footwear part of claim 1, where the tubular knitted sock and the polyurethane film will be bonded by means of an adhesive.
